(19) Europäisches Patentamt / European Patent Office / Office européen des brevets

(11) **EP 1 779 665 B1**

(12) **FASCICULE DE BREVET EUROPEEN**

(45) Date de publication et mention
de la délivrance du brevet:
**22.05.2013 Bulletin 2013/21**

(21) Numéro de dépôt: **04786024.2**

(22) Date de dépôt: **30.07.2004**

(51) Int Cl.:
***H04N 7/26*** ***(2006.01)***

(86) Numéro de dépôt international:
**PCT/FR2004/002066**

(87) Numéro de publication internationale:
**WO 2006/024704 (09.03.2006 Gazette 2006/10)**

(54) **PROCEDE DE REDUCTION DE LA TAILLE D'UN FICHIER NUMERIQUE AUDIO, IMAGE OU VIDEO.**

VERFAHREN ZUR REDUKTION DER GRÖSSE EINER DIGITALEN AUDIO-, BILD- ODER VIDEODATEI

METHOD FOR REDUCING SIZE OF A DIGITAL AUDIO, IMAGE OR VIDEO FILE

(84) Etats contractants désignés:
**AT BE BG CH CY CZ DE DK EE ES FI FR GB GR HU IE IT LI LU MC NL PL PT RO SE SI SK TR**

(43) Date de publication de la demande:
**02.05.2007 Bulletin 2007/18**

(73) Titulaire: **I-CES (Innovative Compression Engineering Solutions)**
**75007 Paris (FR)**

(72) Inventeur: **Loiseau, Pascale**
**75009 Paris (FR)**

(74) Mandataire: **Mazabraud, Xavier**
**Cabinet Moutard**
**35 rue de la Paroisse**
**78000 Versailles (FR)**

(56) Documents cités:
**US-A- 5 144 688**

- **KONDO T ET AL: "New ADRC for consumer digital VCR" 8TH INTERNATIONAL CONFERENCE ON VIDEO, AUDIO AND DATA RECORDING, BIRMINGHAM, ENGLAND, 24-26 APRIL, 1990, pages 144-150, XP006517160 IEE CONFERENCE PUBLICATION, UK**
- **HIDEO NAKAYA ET AL: "AN HDTV IMAGE PROCESSING SIMULATOR AND ITS APPLICATIONS TO BIT RATEREDUCTION" PROCEEDINGS OF THE INTERNATIONAL WORKSHOP ON SIGNAL PROCESSING OF HDTV, L'AQUILA, FEB. 29 - MAR. 2, 1988, vol. 2, 1988, pages 309-316, XP000075067 AMSTERDAM, ELSEVIER, NL**
- **KYMINH LIANG ET AL: "Variable block size multistage VQ for video coding" PROCEEDINGS OF THE 25TH ANNUAL CONFERENCE OF THE INDUSTRIAL ELECTRONICS SOCIETY -IECON '99- SAN JOSE, CA, USA, 29 NOV.-3 DEC., 1999, vol. 1, 1999, pages 447-453, XP010366835 IEEE, PISCATAWAY, NJ, USA ISBN: 0-7803-5735-3**

EP 1 779 665 B1

**Description**

La présente invention concerne un procédé de réduction de la taille d'un fichier numérique audio, image et/ou vidéo, conçu de manière à ne transmettre à une entité destinataire qu'un nombre réduit de données représentatives indispensables pour recomposer le fichier selon sa forme d'origine, grâce à un décodeur.

Dans le document Kondo et al "New ADRC for consumer digital VCR", 8th International Conference on video, audio and data recording, Birmingham, England, 24-26 April, 1990, page 144-155, XP006517160, il est décrit un système de codage ADRC (Adaptive Dynamic Range Coding) qui supprime les redondances dans chaque niveau de pixel en divisant l'image en une pluralité de petits blocs (par exemple de n lignes par n échantillons). Du fait que le niveau dynamique de chaque bloc est relativement petit, le nombre de bits de quantification requis devient également petit. En définissant le niveau dynamique de chaque bloc, les zones à niveau de redondance, supérieures à un maximum et inférieures à un minimum peuvent être supprimées.

Par ailleurs, on sait que selon les procédés de réduction classiques, les composantes des données numériques d'un fichier - couches de couleurs ou canaux audio- sont traitées distinctement. Seules les images en niveaux de gris codées sur 8 bits et les images indexées sur une palette de 256 combinaisons de couleurs sont représentées par une composante unique. De même, seules certaines séries de valeurs redondantes successives sont réduites par les systèmes de compression par répétition. Pour réduire la taille des données, les systèmes existants de compression réduisent le nombre de valeurs par composante et la hauteur de celles-ci, mais continuent de coder le même nombre de composante que celles d'origine et le même nombre de valeurs, car la combinaison des valeurs distinctes par composante ou des composantes entraîne une allocation trop importante de bits nécessaires à leur codage.

L'invention a plus particulièrement pour but de répondre aux problèmes posés par l'optimisation accrue du taux de compression des données numériques brutes, sans dégradation perceptible de qualité supplémentaire.

A cet effet, elle se propose de réduire le nombre total de données numériques d'une composante unique d'un fichier audio (mono), image et/ou vidéo en niveaux de gris et le nombre de données d'une composante et/ou le nombre de composantes des fichiers audio multicanaux, des images RVB, CMJN, YUV et des fichiers vidéo RVB et YUV, en ne transmettant à l'encodeur que des données représentatives comportant les références des valeurs intégrées et de celles des valeurs intégrantes, étant entendu que :

- une donnée représentative est une association d'au moins deux valeurs et/ou la référence d'un groupe de valeurs associé à un autre groupe de valeurs, les valeurs ou les groupes de valeurs pouvant appartenir à la même composante ou à une composante différente,
- une valeur intégrée est le quotient de la plus petite valeur de l'association de deux nombres par la plus grande valeur de ces deux nombres,
- la valeur intégrante est la plus grande valeur que l'on doit réduire pour pouvoir la coder sur un ou deux octets lorsqu'elle a accueilli la référence de la valeur intégrée. Lorsqu'elle a été réduite et qu'elle a accueilli la référence de la valeur intégrée, elle devient une donnée représentative.

En vue de parvenir à ce résultat et dans le but de ne transmettre au codeur qu'un nombre réduit de données représentatives indispensables pour recomposer le fichier dans son intégralité, le procédé de réduction selon l'invention comprend une phase de réduction du fichier comportant :

- une étape de détermination d'au moins une valeur intégrante $V_T$ consistant en la plus grande valeur du fichier et d'au moins une valeur intégrée $V_I$ égale au rapport entre la plus petite valeur du fichier et la valeur intégrante, et
- une étape de détermination d'une valeur $Q_R$, permettant de recomposer le fichier sous sa forme d'origine, cette valeur $Q_R$ étant égale à la somme d'une valeur arrondie $C_F$ représentative de la valeur intégrée et d'une valeur arrondie représentative du rapport entre la valeur intégrante et un coefficient $C_v$ fonction d'un taux de compression et/ou d'un taux d'erreur désiré.

Ce procédé permet donc d'effectuer la réduction de la taille des composantes et du nombre de composantes du fichier par conservation des données caractéristiques d'au moins une composante et/ou d'un groupe de valeurs d'une ou plusieurs composantes, qui servent à la fois au codage et à la restitution du nombre originel de valeurs des composantes et du nombre originel de composantes du fichier recomposé selon ses caractéristiques d'origine.

En particulier, ce procédé permet de réduire la chaîne totale des données d'origine à coder. La composante réduite et/ou le nombre réduit de composantes transmis à l'encodeur ne contient qu'un nombre réduit de données caractéristiques des valeurs intégrées et des valeurs conservées. Ainsi, par exemple, la taille d'un fichier audio dont les valeurs de la composante du canal droit ont été intégrées aux valeurs ou aux groupes de valeurs du canal gauche est diminuée de 50%. De même, la taille d'un fichier image ou celle d'une vidéo peut être divisée par 1/3 ou par 2/3.

On constate qu'en réduisant le nombre de combinaison potentielle, le procédé selon l'invention accroît le ratio de compression par rapport aux systèmes conservant un nombre de données et un nombre de composantes identiques à ceux du fichier d'origine.

Un autre avantage de ce procédé consiste en ce qu'il réduit indistinctement les données identiques successives et les données différentes successives, contrairement aux systèmes existants qui ne diminuent que le nombre de données identiques successives.

Avantageusement, le procédé selon l'invention s'applique indistinctement aux valeurs de la même composante (par exemple une composante de couleur) et aux valeurs de composantes différentes (par exemple deux composantes de couleur différentes).

Il peut n'utiliser qu'une seule composante pour restituer l'ensemble des composantes de la source et prévoit un lecteur image, audio et vidéo spécifique, autorisant une visualisation ou une écoute spécifique du fichier numérique optimisé par l'invention.

Un mode de mise en oeuvre du procédé selon l'invention sera décrit ci-après, à titre d'exemple non limitatif, avec référence aux dessins annexés, dans lesquels :

La figure 1 est une représentation schématique illustrant les phases de compression et de décompression du procédé selon l'invention ;

La figure 2 est une représentation schématique illustrant la phase de détermination et de transformation des valeurs intégrées et des valeurs intégrantes.

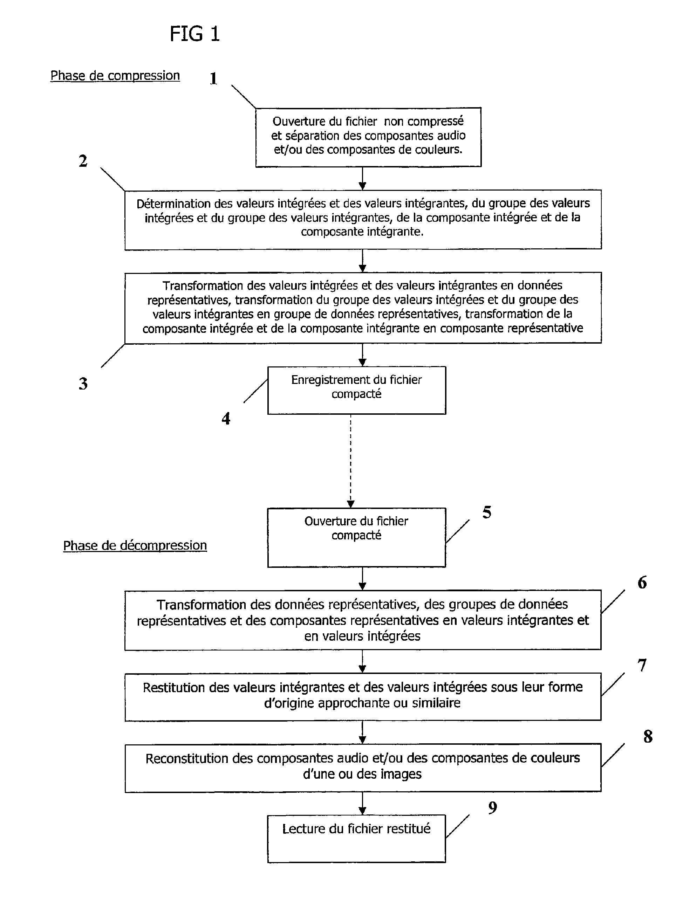

La figure 1 est un organigramme du procédé, selon l'invention, comportant deux étapes, à savoir la compression et la restitution.

L'étape de compression comprend quatre phases :

- une phase d'ouverture du fichier non compressé et de séparation des composantes audio et de séparation des composantes de couleurs (bloc 1),
- une phase de détermination des valeurs intégrées et des valeurs intégrantes du groupe des valeurs intégrées et du groupe des valeurs intégrantes, de la composante intégrée et de la composante intégrante (bloc 2),
- une phase de détermination des valeurs intégrées et des valeurs intégrantes en données représentatives, de transformation du groupe des valeurs intégrées et du groupe des valeurs intégrantes en groupe de données représentatives, et de transformation de la composante intégrée et de la composante intégrante en composante représentative (bloc 3), et
- une phase d'enregistrement du fichier compacté (bloc 4).

L'étape de restitution du fichier compacté comprend quatre phases:

- une phase d'ouverture du fichier compacté (bloc 5),
- une phase de transformation des données représentatives, des groupes de données représentatives et des composantes représentatives en valeurs intégrantes et en valeurs intégrées (bloc 6),
- une phase de restitution des valeurs intégrantes et des valeurs intégrées sous leur forme d'origine approchante ou similaire (bloc 7),
- une phase de reconstitution des composantes audio et/ou des composantes de couleurs d'une ou des images (bloc 8) et,
- une phase de lecture du fichier restitué (bloc 9).

Ainsi, à titre d'exemple, un fichier audio est caractérisé par deux valeurs, à savoir à droite par la plus petite valeur soit «2869» et à gauche par la plus grande valeur soit «4024» (valeur intégrante). La valeur intégrée est : (2869/4024)= $7.10^{-2}$ La réduction de la valeur intégrante (canal gauche) est : (4024/100) = 40.

L'association des valeurs intégrées et intégrantes résulte d'une séquence opératoire comprenant les deux étapes suivantes :

On commence par calculer le rapport ($C_F$) entre la valeur intégrée ($V_I$) et la valeur intégrante ($V_T$), multiplié par 10 et arrondi à une valeur entière.

$$C_F = \text{arrondi.} \left( \frac{V_I}{V_T} \times 10 \right)$$

Ensuite pour obtenir la donnée représentative ($Q_R$), on intègre ($C_F$) à la valeur intégrante réduite par un coefficient variable ($C_v$) en fonction du taux de compression et du taux d'erreur désiré.

$$Q_R = \text{arrondi.} \left( \frac{V_T}{C_v} \times 10 \right) + C_F$$

Ainsi, ($C_F$) = [arrondi. (2869/4024) x 10] = 7 et ($Q_R$) = [arrondi. (4024/100) x 10 + (7)] = 407
La restitution impose de dissocier la valeur représentative ($Q_R$) pour reconstituer ($V_T$) et ($V_I$).

$$VT = \text{arrondi.} \left( \frac{V_R}{10} \times C_v \right)$$

Et la valeur ($V_I$) est obtenue selon la formule suivante :

$$V_I = \left( V_T \times \frac{C_v}{10} \right)$$

Dans cet exemple, on obtient ($V_T$) = (407/10)* 100 = 4070 et ($V_I$) = (4070*0,7) = 2849. Les deux valeurs restituées sont proches des valeurs originales (2869 et 4024) : l'erreur est inférieure à 1% et donc imperceptible.

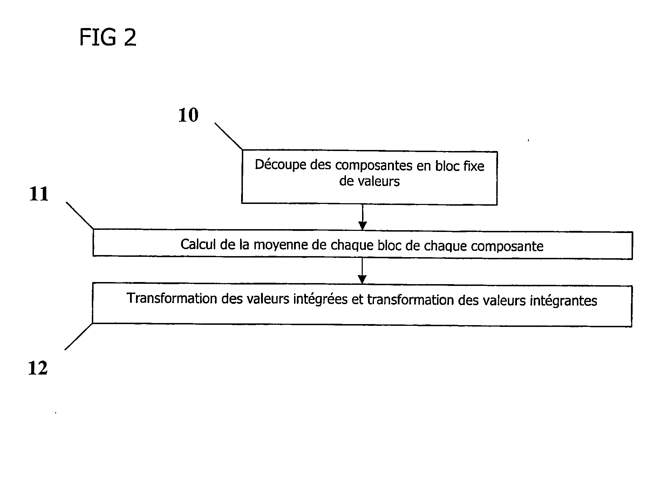

La figure 2 représente l'étape de détermination des groupes de valeurs intégrées et des valeurs intégrantes. Cette étape comprend les phases suivantes :

- une première phase de découpe des composantes en blocs fixes de valeur (par exemple 64 valeurs pour les blocs des images et 80 à 256 pour les échantillons audio),
- une deuxième phase de calcul de la moyenne de chaque bloc de chaque composante (soit le rapport entre la somme des valeurs du bloc par le nombre de valeurs qui contient ce bloc). Ces moyennes sont variables, de sorte que la moyenne la plus élevée constitue le groupe des valeurs intégrantes et les autres moyennes constituent le groupe des valeurs intégrées.
- une troisième phase de transformation des groupes des valeurs intégrées et des groupes de valeurs intégrantes en groupe de données représentatives. Ainsi par exemple, la moyenne de la valeur d'un bloc de la couche rouge d'une image est de 195, la moyenne d'un bloc de couche verte est 128 et la moyenne du bloc de la couche bleue est 53. Le groupe des valeurs intégrantes sera le bloc rouge. La transformation de ces valeurs en données représentatives permet de regrouper les valeurs des couches vertes et bleues.

Dans cet exemple, les valeurs de la couche verte (6) et de la bleue (2) peuvent être groupées 2 à 2 sur un octet.
Qu'il s'agisse de valeurs, de groupes de valeurs et/ou de composantes, la règle distinguant les valeurs intégrées des valeurs intégrantes est fonction de leur différence. La valeur intégrée est représentée par la valeur la plus basse. La valeur intégrante est la valeur la plus élevée. Pour déterminer les valeurs intégrées et les valeurs intégrantes, on découpe le fichier numérique en groupe fixe de valeurs (bloc 10) et on effectue la moyenne des valeurs de chaque bloc (bloc 11). Ainsi on peut déterminer pour un fichier audio quel canal contient les valeurs les plus élevées. Pour une image, on déterminera de la même façon dans le cas d'une image RVB quelle est la couche de couleur R, V ou B qui contient les données intégrantes ou encore dans le cas d'une image CMJN quelles composantes C, M, J ou N contiennent les valeurs les plus élevées.

Le rapport entre les valeurs intégrées et les valeurs intégrantes est calculé et stocké temporairement. La transformation de la valeur intégrante est calculée et stockée temporairement. Ensuite, les deux valeurs sont réunies et deviennent une seule donnée représentative.

**Revendications**

1. Procédé de traitement d'un fichier numérique de type audio, image ou vidéo, ce procédé comprenant une phase de réduction d'au moins un couple de valeurs du fichier en une valeur compressée représentative ($Q_R$) et une phase de reconstitution du fichier dans son format d'origine à partir de ladite valeur compressée représentative, **caractérisé en ce que**:

    I. La phase de réduction comporte :

        - la prise en compte pour le dit au moins un couple de valeurs du fichier, l'une de ces valeurs étant plus grande que l'autre,
        - la détermination d'une valeur intégrante $V_T$ consistant en la plus grande valeur dudit couple et d'une valeur intégrée égale au rapport entre la plus petite valeur $V_I$ et la valeur intégrante $V_T$,
        - la détermination de la valeur compressée représentative $Q_R$ à partir de laquelle il est possible de recomposer le couple de valeur du fichier d'origine, cette valeur compressée représentative $Q_R$ étant égale à la somme d'une valeur $C_F$ égale à l'arrondi <u>du</u> produit de la valeur intégrée $\dfrac{V_I}{V_T}$ par un facteur 10

$$C_F = \text{arrondi}\left(\frac{V_I}{V_T} \times 10\right)$$ et de la valeur arrondie du produit par 10 du rapport entre la valeur intégrante $V_T$ et un coefficient $C_V$ variable en fonction d'un taux de compression et d'un taux d'erreur désiré, soit :

$$Q_R = \text{arrondi}\left[\frac{V_T}{C_V} \times 10\right] + C_F,$$

    II. La phase de reconstitution du couple de valeur du fichier comprend successivement, selon un processus inverse de la phase de réduction :

        - le calcul de la valeur intégrante reconstituée $V_T{}^*$ au moyen de la relation : $V_T{}^* = \text{arrondi}\left(\dfrac{Q_R}{10} \times C_V\right),$
        - le calcul de la plus petite valeur $V_I{}^*$ reconstituée par la formule :

$$V_I{}^* = \left[V_T{}^* \times \frac{C_F}{10}\right],$$

        - la reconstitution du fichier comportant le couple de valeurs reconstituées $V_T{}^*$ et $V_I{}^*$.

**Patentansprüche**

1. Verfahren zur Bearbeitung einer digitalen Audio-, Bild- oder Videodatei wobei das Verfahren eine Redulctionsphase für mindestens ein Paar von Werten der Datei zu einem repräsentativen komprimierten Wert ($Q_R$) und eine Rekonstitutionsphase der Datei zu ihrem ursprünglichen Format aus dem repräsentativen komprimierten Wert umfasst, **dadurch gekennzeichnet dass**,

I. die Redulctionsphase folgendes umfasst:

- Berücksichtigung des mindestens einen Paares von Werten, wobei einer dieser Werte größer ist als der andere;
- Bestimmung eines integrierten Wertes $V_T$ bestehend aus dem größten Wert des Paares und einem integrierten Wert, der gleich dem Verhältnis zwischen dem kleinsten Wert $V_I$ und dem Integralweit $V_T$ ist,
- Bestimmung des repräsentativen komprimierten Wertes $Q_R$, von dem aus es möglich ist, das Wertepaar der Originaldatei zu rekonstruieren, wobei dieser repräsentative komprimierte Wert $Q_R$ gleich der Summe eines Wertes $C_F$ ist, der gleich der Rundung des Produkts des integrierten Wertes $V_I/V_T$ mit einem Faktor 10, $C_F$ = Rundung $(V_I/V_T \times 10)$, ist, und des um 10 gerundeten Wertes des Produkts des Verhältnisses zwischen dem Integralwert $V_T$ und einem in Funktion eines Kompressionsgehaltes und einer gewünschten Fehlerquote variablen Koeffizienten Cv, das heißt:

$$Q_R = \text{Rundung}\left[\frac{V_T}{C_V} \times 10\right] C_F,$$

II. die Rekonstitutionsphase des Weitepaares der Datei nacheinander gemäß einem Umkehrverfahren der Reduktionsphase folgendes umfasst:

- Berechnung des rekonstituierten Integralwertes $V_T{}^*$ durch die Formel:

$$V_T{}^* = \text{Rundung}\left(\frac{Q_R}{10} \times C_V\right),$$

- Berechnung des kleinsten rekonstituierten Wertes $V_I{}^*$ durch die Formel:

$$V_I{}^* = \left[V_T{}^* \times \frac{C_F}{10}\right],$$

- Rekonstitution der Datei, die das Paar von rekonstituierten Werten $V_T{}^*$ und $V_I{}^*$ umfasst.

**Claims**

1. Method for processing a digital audio, image or video type file, wherein this method comprises a phase for reducing at least one pair of values from the file into a compressed representative value ($Q_R$) and a phase for restoring the file to its original format from said compressed representative value, **characterised in that**:

I. The reduction phase includes:

- the taking into account of said at least one pair of values of the file, wherein one of these values is higher than the other,
- the determination of an integrating value $V_T$ consisting of the highest value of said pair and an integrated value equal to the relationship between the lowest value $V_I$ and the integrating value $V_T$,
- the determination of the compressed representative value $Q_R$ from which the pair of values of the original file may be restored, wherein this compressed representative value $Q_R$ is equal to the sum of a value $C_F$

equal to the rounded off value resulting from multiplying the integrated $\frac{V_I}{V_T}$ value by a factor 10 $C_F$ = rounded off value $(\frac{V_I}{V_T} \times 10)$ and the rounded off value of the resulting value multiplied by 10 of the relationship between the integrating value $V_T$ and a variable coefficient $C_V$ corresponding to a desired compression rate and/or an error rate, i.e. $Q_R = \text{rounded off value} \left[ \frac{V_T}{C_V} \times 10 \right] + C_F,$

II. The restoration phase of the pair of values of the file successively comprises according to an inverse process of the reduction phase:

- the calculation of the restored integrating value $V_T{}^*$ using the relationship:

$$V_T{}^* = \text{rounded off value}^{\left( \frac{Q_R}{10} \times C_V \right)},$$

- the calculation of the lowest value $V_1{}^*$ restored by the formula:

$$V_I{}^* = \left[ V_T{}^* \times \frac{C_F}{10} \right],$$

- the restoration of the file including the pair of restored values $V_T{}^*$ and $V_I{}^*$.

# FIG 1

Phase de compression **1**

> Ouverture du fichier non compressé et séparation des composantes audio et/ou des composantes de couleurs.

**2**

> Détermination des valeurs intégrées et des valeurs intégrantes, du groupe des valeurs intégrées et du groupe des valeurs intégrantes, de la composante intégrée et de la composante intégrante.

> Transformation des valeurs intégrées et des valeurs intégrantes en données représentatives, transformation du groupe des valeurs intégrées et du groupe des valeurs intégrantes en groupe de données représentatives, transformation de la composante intégrée et de la composante intégrante en composante représentative

**3**

> Enregistrement du fichier compacté

**4**

> Ouverture du fichier compacté **5**

Phase de décompression

> Transformation des données représentatives, des groupes de données représentatives et des composantes représentatives en valeurs intégrantes et en valeurs intégrées **6**

> Restitution des valeurs intégrantes et des valeurs intégrées sous leur forme d'origine approchante ou similaire **7**

> Reconstitution des composantes audio et/ou des composantes de couleurs d'une ou des images **8**

> Lecture du fichier restitué **9**

FIG 2

**10**

Découpe des composantes en bloc fixe
de valeurs

**11**

Calcul de la moyenne de chaque bloc de chaque composante

Transformation des valeurs intégrées et transformation des valeurs intégrantes

**12**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KONDO et al.** New ADRC for consumer digital VCR. *8th International Conference on video, audio and data recording,* 24 Avril 1990, 144-155